# EUROPEAN PATENT SPECIFICATION

(11) **EP 2 544 317 B1**
(45) Date of publication and mention of the grant of the patent: **01.10.2014**
(21) Application number: 11005558.9
(22) Date of filing: 07.07.2011
(51) Int. Cl.: H01S 3/00, B23K 26/06

(54) **A method and an apparatus for controlling the time interval between consecutive pulses of a pulsed laser beam, a respective laser processing method and a system**
Verfahren und Vorrichtung zur Regelung des Zeitintervalls zwischen aufeinanderfolgenden Impulsen eines Impulslaserstrahls, entsprechendes Laserverarbeitungsverfahren und System
Procédé et appareil de contrôle de l'intervalle temporel entre les impulsions consécutives d'un faisceau laser pulsé, procédé de traitement laser respectif et système

(43) Date of publication of application: 09.01.2013
(73) Proprietor: Universität Stuttgart, 70174 Stuttgart (DE)
(72) Inventor: Früchtenicht, Johannes, 70197 Stuttgart (DE)
(74) Representative: Müller-Boré & Partner Patentanwälte PartG mbB

(56) References cited:
- EP-A1- 2 090 880
- EP-A2- 0 385 430
- WO-A1-92/04791
- WO-A2-01/78200
- JP-A- 3 103 838
- US-A1- 2006 191 884

## Description

The invention relates to a method and a respective apparatus for controlling the time interval between consecutive pulses of a pulse train. The invention relates further to a laser processing method employing the method for controlling the time interval between consecutive pulses of a pulse train and to a respective laser processing system.

A number of different applications, such as for example machining of photovoltaic elements involve the formation of complex patterns comprising a plurality of crossing and/or curved lines. If the machining is performed by a pulsed laser the pattern lines are formed by overlapping individual spots (laser machined spots), each spot being formed by a laser pulse being incident on a surface of the work piece. The positioning of the individual laser spots can be realized either by scanning the laser beam over the work piece or by moving the work piece itself. Hybrid techniques are also possible. Notwithstanding whether the laser beam is scanned or whether the work piece is moved, the realization of a complex pattern comprising curved lines, crossing lines, etc. typically involves an acceleration or deceleration (i.e. speed changes) of various mechanical parts of the workpiece positioning system and/or of the laser beam scanning system, especially at the beginning and the end phase of the machining process. If during the acceleration and/or deceleration phases of the machining process the repetition rate of the pulsed laser light remains constant, the geometrical/spatial interval between the individual laser processed spots becomes uneven. This is normally not tolerable as the machining processes typically require an even interval.

A conventional solution to this problem is to switch off the laser or to direct the laser beam away from the work piece during the phases of change or ramp of the machining speed. Thus for example the laser beam may be directed to an appropriate absorber. A disadvantage of this solution is the incurring of high losses of the overall process speed and/or efficiency. A further disadvantage may be insufficient utilization of the workpiece material, since all areas, which during the acceleration phase are at the processing location of the switched off laser processing machine either cannot be machined or can be machined only after a time consuming return to the (initial) machining position.

Another solution to the above problem is to attenuate the laser power, for example by means of an EOM (**E**lectro-**O**ptical **M**odulator), depending on the machining speed. This approach has also disadvantages, since the interval between the laser spots still remains uneven. Thus for example the spatial interval between the laser spots becomes successively larger in case of acceleration. Furthermore, the laser processing of the workpiece material usually exhibits a non-linear and/or a noncontinuous (e.g. stepwise) dependency on the laser power and more specifically on the pulse energy (for example ablation thresholds, etc). Thus the precise control of the laser power depending on the material to be processed is difficult and error prone. This also has a negative impact not only on the machining speed and the machining quantity, but also on the machining quality.

US 2006/191884 discloses a high-speed, precise, laser-based material processing method and system, wherein relative movement of target material and a pulsed laser output used to process the material are synchronized. The laser-based system includes a pulsed laser source for generating a set of laser pulses, and a laser output control that controllably selects a subset of pulses from the set of laser pulses at a position beyond the laser source to obtain the pulsed laser output. The laser-based system further includes a mechanism for synchronizing the pulsed laser output with relative movement of the target material. A beam delivery and focusing subsystem delivers at least a portion of the synchronized pulsed laser output to the target material as a laser material processing output to process the target material. A positioning subsystem moves the target material relative to the pulsed laser output.

A problem of the present invention is to overcome the above mentioned disadvantages of the prior art methods and systems.

This problem is solved by a method for processing a workpiece as defined in claim 1 and a laser processing system for processing a workpiece as defined in claim 7.

Preferred embodiments are defined in the dependent claims.

According to the invention, there is proposed a method for controlling the time interval between consecutive pulses of a pulse train generated by a laser source employing controlling of the time delay introduced by a delay unit. The method for controlling the time interval between consecutive pulses of a pulse train generated by a laser source comprises
coupling at least one pulse from the pulse train generated by a laser source into a delay unit external to the laser source or to the resonator of the laser source;
controlling the time delay of the at least one pulse introduced by the delay unit; and
outputting the at least one coupled pulse from the delay unit.

Preferably the time delay of the at least one pulse in the delay unit is controlled individually for each pulse, i.e. on a pulse-by-pulse basis.

According to the invention a (predetermined or predeterminable) pulse of an original pulse train emitted from a laser source (for example a Nd-YAG laser operated in a pulsed mode) is coupled directly or via a suitable optical coupling system into a delay unit (optical delay line). The delay unit is external to the resonator(s) of the laser source or to the laser source, i.e. the delay unit is not part of the pulsed laser source or the resonator(s) of the pulsed laser source.

In an embodiment, a pulse may be coupled into the delay unit only after the subsequent pulse is outputted from the delay unit. In another embodiment ("pulse burst mode") a plurality of pulses may be successively coupled into the delay unit, without releasing the previous pulse/pulses from the delay unit, thereby realizing a pulse burst generator. After a controllable time in the delay unit, the coupled plurality of pulses may be outputted from the delay unit in a single burst. For example, the plurality of pulses may be outputted on demand from a laser processing system, laser measuring system or other suitable laser system.

The delay unit introduces a controllable time delay of the at least one pulse coupled into the delay unit with respect to a preceding or a subsequent pulse. By controlling the time delay introduced by the external delay unit, preferably on a pulse-by-pulse basis, it is possible to adjust the time interval between a given laser pulse and the preceding or subsequent laser pulse. The adjusted time interval between consecutive pulses may be greater than or (at least for a given number of pulses) smaller than the time interval between consecutive pulses of the pulse train generated by the light source.

Since the repetition rate of a pulse train is inversely proportional to the time interval between two consecutive pulses of the pulse train, it is thus possible to control or adjust the repetition rate of an original pulse train emitted from a laser source. Depending on the introduced time delay, various regular or irregular repetition rates and repetition rate patterns may be realized.

After its output (decoupling) from the delay unit the at least one pulse may be directed by a suitable optical system to a workpiece to be processed, to a specimen to be illuminated or to any other system that requires controllable/variable time interval between consecutive pulses of a pulse train.

The method for controlling the time interval between consecutive pulses may comprise controlling the timing of the output of the at least one pulse from the delay unit. The timing of the pulse output from the delay unit may depend on the timing of the coupling of the pulse into the delay unit and the time delay to be introduced by the delay unit. The timing of the coupling of a given pulse into the delay unit may be determined based on data regarding the pulse output from the laser source, including data of the repetition rate of the laser source and/or data regarding the timing of the pulse output from the laser source.

Thus for example, the timing of the coupling of a given pulse into the delay unit may be determined based on the detected timing of the emission of the pulse from the laser source.

The timing of the output of the at least one pulse from the delay unit may also be determined based on the calculated or predicted timing of the emission of the pulse from the laser source. The timing of emission of the pulse from the laser source may be calculated/predicted based on data concerning the emission of a preceding pulse (for example a first or previous pulse in a pulse train) from the laser source and the (known) output repetition rate of the laser source. In many cases the output repetition rate of the pulsed laser source will be sufficiently stable (i.e. without a significant jitter), so that the time interval between two consecutive pulses entering the delay unit will be substantially constant and known in advance. If the jitter is significant, it is possible to employ an additional delay line, which is configured to delay a given pulse with respect to its own control signal. A control unit controlling the output of the at least one pulse from a delay unit is thus given sufficient time to generate a respective control signal. If the jitter is insignificant the control unit's signal for the previous pulse may be sufficient to generate a control signal.

In an aspect the pulse may be outputted from the delay unit "on demand". For example, at least one pulse may be kept "on store" within the delay unit and be output upon demand, for example when the pulse is needed by a laser processing system. Alternatively or in addition, an "on demand" controlling method/system with a controllable time interval between consecutive pulses may be realized by performing a selection of pulses released from the delay unit by a suitable pulse selection unit. In this case at least one of the pulses from the pulse train outputted from the delay unit may be selected on demand (for example when a pulse is needed by a laser processing system) for further use and the non-selected pulses may be discarded. The pulse selection may also be performed prior to coupling the at least one pulse into the delay unit.

The method for controlling the interval between consecutive pulses of a pulse train by means of controlling the time delay introduced by a delay unit may be implemented to realize one or more of the following advantages:

One advantage is the easy implementation in existing laser systems (for example existing laser machining systems), since the method for controlling the time interval between consecutive pulses of a pulse train does not require complex changes of the laser source employed or its replacement. Another advantage is the possibility to control the interval between consecutive pulses and respectively the repetition rate of a pulsed laser beam in a precise and flexible manner, thereby realizing various repetition rate patterns.

The delay unit (optical delay line) may be realized in various ways, employing one or more optical elements such as mirrors, lenses, optical fibers, diffraction gratings, etc. For example, the delay unit may be realized as or comprise a resonator or an optical setup similar to a resonator. The controlling of the time delay of the at least one pulse may comprise controlling the number of cycles which the at least one pulse undergoes in the resonator.

The resonator may be any conventional resonator, for example a linear resonator, a ring resonator, a Fabry-Pérot resonator or any other optical resonator. In the simplest case the resonator may be formed by two plan-parallel or curved mirrors positioned opposite to each other, forming a resonator cavity there between. The resonator may comprise a gain (amplifying) medium, which is optically or otherwise pumped, such as for example a gain medium employed in a regenerative amplifier.

The length of the resonator may be selected such as to match the output repetition rate of the pulsed laser source. For example the resonator length may be selected so that the time interval between two consecutive pulses of the pulsed beam emitted from the light source is an integer times multiple of the time for a resonator roundtrip. The resonator length need not, however, match the output repetition rate of the pulsed laser source. It is possible to select the resonator length such that the time interval between two consecutive pulses it is not necessarily multiple or integer times multiple of the time for a resonator roundtrip. The length of the resonator may be selected depending on the intended time delay between consecutive pulses, the precision of the time delay control, the losses incurred in the resonator, etc. Furthermore, the length of the resonator may be variable. To this extend, one or more of the mirrors or other optical elements forming the resonator may be movable.

The pulse is allowed to undergo a controllable number of cycles (roundtrips) in the resonator. After undergoing the specific number of cycles in the resonator, the pulse is outputted (decoupled) from the resonator and for example directed by a suitable optical system to a workpiece to be processed, a specimen to be illuminated or any other system employing pulsed light.

By controlling the number of cycles, which a given pulse coupled in an external resonator undergoes therein, it is possible to control the dwelling time of a given pulse in the resonator. After the pulse is outputted from the resonator, this results in a variable and controllable time delay of the current pulse with respect to the preceding and/or the subsequent pulse. By varying the number of cycles in the resonator and thus the time delay, preferably on a pulse by pulse basis, it is possible to individually adjust the time interval between a given laser pulse and the preceding and/or subsequent laser pulse.

The method for controlling the time interval between consecutive pulses of a pulse train may further comprise selecting at least one (predetermined or predeterminable) pulse of the original pulse train generated by the laser source and/or from the train of pulses released from the delay unit. The non-selected pulses may be discarded, for example by deflecting them to a light absorber or other beam dump by means of an electro-optical modulator (EOM), an acousto-optical modulator (AOM), a Pockels cell, a movable mirror, a glass element, or any other suitable deflecting means.

The selection of at least one pulse of the pulse train generated by the laser source and/or from the train released from the delay unit may be undertaken independent of the delaying of the pulse in the delay unit. An aspect of the present invention relates to a method for controlling the time interval between consecutive pulses of a pulse train generated by a laser source, comprising selecting at least one (predetermined or predeterminable) pulse of the original pulse train generated by the laser source and discarding the non-selected pulses.

The pulses may be selected individually, i.e. on a pulse-by-pulse basis. The pulses may be for example (intentionally) selected based on various (predetermined or detected) parameters, such as parameters of the pulsed laser source, the laser system and/or the process employing the pulsed laser train with controlled time interval.
Generally, by performing pulse selection it is possible to adjust the time interval between two consecutive pulses to a value greater than the original time interval between two consecutive pulses of the pulse beam generated by the laser source. Accordingly, the repetition rate may be adjusted to a value lower than the original repetition rate.

By combining selecting some of the pulses of the original pulse beam and controlling the time delay introduced by the delay unit (for example by controlling the number of cycles of the selected pulses in the resonator), it is possible to realize various control patterns of the time interval between consecutive pulses and thus various control patterns of the repetition rate of the pulsed laser beam. Thus, it is also possible to realize control pattern, in which at least for a given number of pulses, the time interval between consecutive pulses may be adjusted/controlled to a value lower than the original time interval between two consecutive pulses of the pulse beam generated by the laser source.

The time interval between consecutive pulses in a pulse train and in particular the time delay introduced by the delay unit and/or the selection of a pulse from the original pulse train generated by the laser source and/or from the pulse train released from the delay unit may be controlled based on various parameters. If for example the method for controlling the time interval between consecutive pulses of a pulse train is used within a laser machining method and a system for machining a workpiece the time delay and/or the pulse selection may be controlled or varied depending on various parameters of the machining process, such as for example the (nominal or momentary) machining speed, the machining pattern, etc. The parameters based on which the time interval between consecutive pulses (and thus the repetition rate) is controlled may be determined in advance and stored for example in a suitable storage medium. It is also possible to control the time interval between consecutive pulses depending on current measurements of one or more parameters.

In addition or as an alternative the time interval between consecutive pulses (and thus the repetition rate) of the pulse train may be controlled depending on at least one measured/detected parameter of the original pulse beam generated by the laser source. The at least one measured/detected parameter of the original pulse beam generated by the laser source may be the pulse repetition rate, the average and/or peak pulse energy, the shape and length of each pulse, the beam quality, etc. Thus for example, it is possible to compensate for fluctuations in the energy, the pulse repetition rate or other parameters of the laser source. As explained above, the time interval between consecutive pulses may be controlled by controlling the time delay introduced by the delay unit and optionally the selection of a pulse of the original pulse train and/or from the pulse train released from the delay unit.

The method may further comprise amplifying the pulse in the delay unit and/or introducing variable pulse losses.

The amount of pulse amplification may be determined such as to compensate for the losses in the pulse energy incurred in the delay unit (for example in the resonator at each resonator cycle). To this extend the delay unit may include an optically or otherwise pumped gain (amplifying) medium.

The variable pulse losses may be losses which are intentionally added for a pulse with a given time delay introduced by the delay unit. The amount of the intentionally added variable pulse losses may be determined such that the overall losses are substantially the same for all pulses with different time delays. If for example the delay unit is a resonator or comprises a resonator, the variable pulse losses may be tosses which are intentionally added for a pulse with a given number of cycles in the resonator. The amount of the variable losses intentionally added for a pulse with a given number of cycles may be determined such that the overall losses are the same for all other pulses with a different number of cycles. For example choosing the losses incurred by the maximum necessary number of cycles in the resonator to be the standard overall losses, the intentionally added variable losses for a certain pulse can be determined by the difference between the chosen standard losses and the losses incurred by the number of cycles through the resonator for a given pulse.

According to the invention, there is proposed a method for generating a pulse train with a controllable time interval between consecutive pulses, wherein the time interval between consecutive pulses of the generated pulse train is controlled according to an embodiment of the method for controlling the time interval between consecutive pulses of a pulse train.

According to another aspect there is provided a method for generating at least one pulse "on demand", i.e. upon receiving a control signal from a control unit, said method comprising
coupling at least one pulse from a pulse train generated by a laser source into a delay unit;
outputting the at least one coupled pulse from the delay unit upon receiving a control signal from a control unit.

Thus for example at least one pulse may be kept "on store" within the delay unit and be released upon demand, for example when the pulse is needed by a laser processing system. The method for generating at least one pulse "on demand" may further comprise a selection of pulses coupled into and/or released from the delay unit by a suitable pulse selection unit. In this case at least one of the pulses from the original pulse train and/or from the pulse train released from the delay unit may be selected on demand (for example when a pulse is needed by a laser processing system) for further use and the non-selected pulses may be discarded. The method for generating at least one pulse "on demand" may further comprise controlling the time interval between consecutive pulses in the manner described above.

According to a further aspect, there is proposed an apparatus for controlling the time interval between consecutive pulses of a pulse train generated by a laser source configured to implement the method for controlling the time interval between consecutive pulses of a pulse train. The apparatus for controlling the time interval between consecutive pulses of a pulse train generated by a laser source may comprise a delay unit external to the laser source or to the resonator(s) of the laser source and a control unit configured to control the time delay introduced by the delay unit of an at least one pulse of the pulse train coupled into the delay unit.

The at least one pulse may be released from the delay unit upon receiving a signal from the control unit. The control unit is preferably configured to control the time delay of a given pulse introduced by the delay unit individually for each pulse, i.e. on a pulse-by-pulse basis.

As described above, the delay unit (optical delay line) may be realized in various ways. For example, the delay unit may comprise a resonator and the control unit may be configured to control the number of cycles which the at least one pulse undergoes in the resonator. Preferably, the control unit is configured to control the number of cycles which a given pulse undergoes in the resonator individually for each pulse, i.e. on a pulse-by-pulse basis.

As described above, the resonator may be any conventional resonator, for example a linear, a ring resonator, a Fabry-Pérot resonator or any other optical resonator. The resonator may optionally comprise a gain medium as in a regenerative amplifier. The length of the resonator may be selected such as to match (a multiple or a fraction of) the output repetition rate of the pulsed laser source or the time interval between consecutive pulses of the pulse train output from the pulses laser source. However, as described above, the resonator length need not match the output repetition rate of the pulsed laser source. The length of the resonator may be selected depending on the intended time delay, the precision of the time delay control, the losses incurred in the resonator, etc. Furthermore, the length of the resonator may be variable. To this extend one or more of the mirrors forming the resonator may be movable.

The apparatus for controlling the time interval between consecutive pulses may further comprise a suitable optical system configured to direct the original pulsed laser train emitted from the laser source to the to the delay unit to couple it therein. The optical system may comprise one or more lenses, mirrors, waveguides, beam splitters and/or other optical elements.

The apparatus for controlling the time interval between consecutive pulses may further comprise a pulse input/output control mechanism configured to control the input and/or output of a pulse into/from the delay unit. Thus for example, when the pulse input/output control mechanism is in a "closed" state the pulse may be trapped into the delay unit. In an "open" state, the pulse may be released from the delay unit.

The pulse input/output control mechanism may be configured such as to output (decouple) the at least one pulse, which was previously coupled into the delay unit, from the delay unit upon receiving a control signal from the control unit. The pulse input/output control mechanism may comprise an optical or opto-electronic switch, which enables the releasing of a pulse trapped in the delay unit from the delay unit upon a signal from the control unit. The switch may comprise for example at least one Pockels cell, an electro-optical switch and/or modulator, an acousto-optical switch and/or modulator, a movable optical element or mirror, a glass element, a non-linear element, etc. or a combination thereof.

The apparatus for controlling the time interval between consecutive pulses may be configured such that every pulse from the pulse train emitted from the laser source is coupled into the delay unit. If the pulse is not needed it may be discarded after being released from the delay unit in the manner described above. Alternatively, the apparatus for controlling the time interval between consecutive pulses may be configured such only selected pulses from the pulse train emitted from the laser source are coupled into the delay unit.

In an embodiment, the pulse input/output control unit may be further configured to control the coupling of an incoming pulse into the delay unit. Thus for example, the pulse input/output control unit may be configured such that a pulse is coupled into the delay unit only if the pulse input/output control mechanism is an "open" state.

Furthermore, the apparatus for controlling the time interval between consecutive pulses may comprise at least one optical isolator (also called optical diode) configured to separate the pulse train coupled into the delay unit (i.e. the pulsed laser beam incoming in the delay unit) from the pulse train outputted from the delay unit (i.e. the pulsed laser beam decoupled from the delay unit). This may be advantageous in case the pulse train released from the delay unit goes the same way back as the pulse train coupled into it (such as in case of a delay unit comprising a Fabri-Pérot resonator). By the provision of an optical isolator it is possible to prevent the pulse train released from the delay unit from returning back to the laser source. Instead, the pulse train released from the delay unit may be directed for example to a workpiece. The optical isolator may be for example an optical Faraday isolator comprising an optical Faraday rotator, and one or more polarizing beam splitters. The optical isolator may be a part of the pulse input/output control mechanism and in particular integrated together with the switch or switches and/or modulators comprised in the pulse input input/output control mechanism.

The delay unit and the pulse input/output control unit may together constitute a pulse interval control unit.

The control unit may be implemented by a computer or a computer system or in a dedicated ASIC (application specific integrated circuits). Data concerning the pattern of the time interval between the consecutive laser pulses to be realized (i.e. of the repetition pattern to be realized) and/or concerning parameters of the laser source and/or other parameters may be stored in suitable storing means. The control unit may be configured to determine the timing of the pulse release from the delay unit based on data regarding the pulse output from the laser source as described above in connection with the method for controlling the time interval between consecutive pulses of a pulse train. Alternatively or in addition, the control unit may be configured to send a control signal to the pulse input/output control mechanism to release the pulse from the delay unit. The pulse may be released from the delay unit "on demand", for example when the pulse coupled into the delay unit is needed by a laser processing system. The control unit may be connected to a photodetector, which detects the emission of a given pulse from the laser source. The control unit may also be connected to the laser source and receive from the laser source information concerning the timing of the emitting of a given pulse from the laser source. The control unit may be further connected to various sensors, which monitor the current states of various parameters, for example the parameters of the laser source.

The apparatus may comprise further at least one pulse selection unit configured to select at least one pulse from the original pulse train generated by the laser source and/or to select a pulse from the pulses outputted from the delay unit. The pulse selection unit may be further configured to discard the non-selected pulses, for example by deflecting it to a beam dump (for example an absorber). The pulse selection unit may comprise one or more optical switches and/or modulators, electro-optic switches and/or modulators, acousto-optic switches and/or modulators, etc and/or other optical elements, which are connected to the control unit. The pulse selection unit may be integrated within the pulse input/output control mechanism.

The apparatus (and more specifically the control unit) may be configured to control the time interval between consecutive pulses (and thus the repetition rate) of a pulse train (by controlling the time delay introduced by the delay unit and optionally by controlling the pulse selection by the pulse selection unit) based on various parameters, as described above in connection with the method for controlling the time interval between consecutive pulses of a pulse train.

For example the apparatus may be configured to control the time interval between consecutive pulses of a pulse train based on at least one detected parameter of the original pulse train generated by the laser source. To this extend the apparatus may further comprise a laser output measuring unit connected to the control unit. The laser output measuring unit may comprise a laser pulse output detector configured to detect the output of a laser pulse from the pulsed laser source; and/or a laser output energy sensor, configured to measure the output energy of the pulsed laser source; and/or other sensors configured to measure other parameters of the laser source, such as for example the pulse form.

The delay unit may comprise means for amplifying the pulse in the resonator and/or means for introducing variable pulse losses.

The amount of pulse amplification may be determined such as to compensate for the losses in the pulse energy incurred in the resonator at each cycle. The means for amplifying the pulse in the resonator may be constituted of or may comprise an optically (or otherwise) pumped gain (amplifying) medium.

As described above, variable pulse losses may be losses which are intentionally added for a pulse with a given time delay introduced by the delay unit. The amount of the variable losses may be determined such that the overall losses are the same for all pulses with different time delays. If for example the delay unit is a resonator or comprises a resonator, the variable pulse losses may be losses which are intentionally added for a pulse with a given number of cycles in the resonator. The amount of the variable losses intentionally added for a pulse with a given number of cycles may be determined such that the overall losses are the same for all other pulses with a different number of cycles in the manner described above. The means for introducing variable losses may be integrated within the pulse input/output control mechanism.

Another aspect relates to an apparatus for generating a pulsed laser beam with controllable time interval between consecutive pulses, comprising a laser source configured to generate an original pulse train and an embodiment of the apparatus for controlling the time interval between consecutive pulses of the pulse train described above.

According to the invention, there is provided a method for processing a workpiece comprising
generating a pulse train by a laser source;
controlling the time interval between consecutive pulses of the pulse train according to an aspect of the method for controlling the time interval between consecutive pulses described above;
directing the pulse train with the controlled time interval to the workpiece.

Examples of laser processing methods are laser machining, laser cutting, hole drilling, welding, ablation, material treatment, laser doping (for example of solar cells).

The time interval between consecutive pulses of the pulse train may be adjusted depending on at least one (predetermined or measured) parameter of the processing process. The at least one process parameter may be for example the feed or (nominal or momentary) moving speed of the workpiece and/or of the scanning speed of the laser beam over the workpiece, the illumination time. Other process parameters depending on which the time interval between consecutive pulses may be controlled may be the machining geometry (for example the geometry of cuts to be made, etc.). Still other parameters may be parameters related to the progress of the laser processing, such as for example the deepness of the drilled hole in case of hole drilling.

Still another process parameter may the material to be processed. If for example a workpiece having a hybrid structure is to be machined, the repetition rate of the pulse beam may be adjusted depending on the material to be processed. Thus for example the processing of some materials may require low inter-pulse time interval and thus high repetition rate, whereas other materials may require high inter-pulse time interval and thus low repetition rate.

The time interval between consecutive pulses in a pulse train may be furthermore adjusted based on the pulse energy. If for example the detected pulse energy is lower than a predetermined value, the repetition rate may be increased and vice versa.

In another example a variation of the laser intensity of the laser beam incident on the workpiece may vary across the field of view, due for example to the properties of the optical system employed for directing the pulse train to the workpiece. In case of a large scanning field (field of view) the intensity of the laser beam incident on the workpiece in the periphery of the field of view may be for example less that in the central part of the field of view. According to an embodiment, the time interval between consecutive pulses may be adjusted depending on the location of the laser spot within the field of view in order to maintain a substantially constant power density over the entire field of view.

Still in another example in case of large scanning field (field of view) the speed of the laser beam moving over a workpiece in the periphery of the field of view may be for example higher than in a central part of the field of view. According to an embodiment, the time interval between consecutive pulses (respectively the repetition rate) may be adjusted/controlled depending on the location of the laser spot within the field of view in order to maintain or achieve a substantially constant or desired relative speed between the laser beam and the workpiece over the entire field of view.

The process parameters based on which the time interval between consecutive pulses (and thus the repetition rate) is controlled may be determined in advance, depending on the specific laser processing method, which is to be carried out. Various control patterns may be determined in advance and stored for example in a suitable storage medium. It is also possible to control the time interval between consecutive pulses depending on current measurements of one or more process parameters, such as for example the current feed or moving speed of the workpiece and/or the current scanning speed of the laser beam over the workpiece.

The pulse train with the controlled time interval may be directed to the workpiece by means of a suitable optical system comprising one or more optical elements such as lenses, beam splitters, mirrors, modulators, polarizers, spatial filters and/or other optical elements.

According to the invention as defined in claim 7 there is provided a laser processing system for processing a workpiece comprising
a laser source configured to generate a pulse train; and
an apparatus for controlling the time interval between consecutive pulses of the pulse train according to an aspect of the invention described above; and
a directing system, configured to direct the pulse train with the controlled time interval to the workpiece.

In particular, as described above, the time interval between consecutive pulses of the pulse train may be controlled depending on one or more parameters of the laser processing method employed, such as for example the (nominal or momentary) moving speed of the workpiece and/or of the scanning speed of the laser beam over the workpiece, etc..

Accordingly, the laser processing system may further comprise one or more process parameters measuring units, configured to respectively measure/detect one or more process parameters of the workpiece processing. The at least one or more process parameters, which are measured/detected may be the moving speed of the workpiece and/or of the scanning speed of the laser beam over the workpiece.

The laser processing system may further comprise a directing system, configured to direct the pulse train with the controlled time interval to the workpiece after its release from the delay unit. The directing system may comprise one or more optical elements such as lenses, beam splitters, mirrors, modulators, polarizers, spatial filters and/or other suitable optical elements.

The laser processing method and a laser processing system according to an aspect of the invention may be implemented to realize one or more of the following advantages.

One advantage of the method for processing a workpiece and the laser processing system by a pulse train (pulsed beam) with a controllable time interval between consecutive pulses and thus controllable repetition rate according to an aspect of the invention may be the more efficient utilization of the processing time and/or the surface of the workpiece, in particular the more efficient utilization of the phases of a ramp or a change of the processing speed. It may also be possible to adjust or control the instant repetition rate of the pulse train (pulsed laser beam) irradiating the workpiece depending on various process parameters, such as for example the (instant and/or nominal) machining speed, the (instant and/or nominal) laser beam scanning speed, the instant and/or nominal workpiece moving or feeding speed, etc.. This has considerable advantages in terms of increased productivity, in particular in case of the production of relatively small and/or complex structures requiring a large number of speed changes. Another advantage is the improved quality of the laser machining.

Furthermore, the machining pattern may be varied, even if the scanning speed of the laser beam and/or the moving (positioning) speed of the workpiece are kept constant. In addition, a chosen varied machining pattern may be implemented also with a non-constant laser beam and/or workpiece positioning speed.

Still another advantage is the easy implementation in existing laser machining systems, since the method according to the present invention does not require complex changes of the laser source employed or its replacement.

The above and other aspects and examples will now be described with reference to the following drawings:
- Fig. 1: shows an example conventional laser machining system;
- Fig. 2: shows an example laser machining system according to an embodiment of the invention.

It should be understood that even though embodiments are separately described, single features thereof may be combined to additional embodiments. Furthermore, in the figures all elements indicated by the same reference sign relate to the same or similar elements.

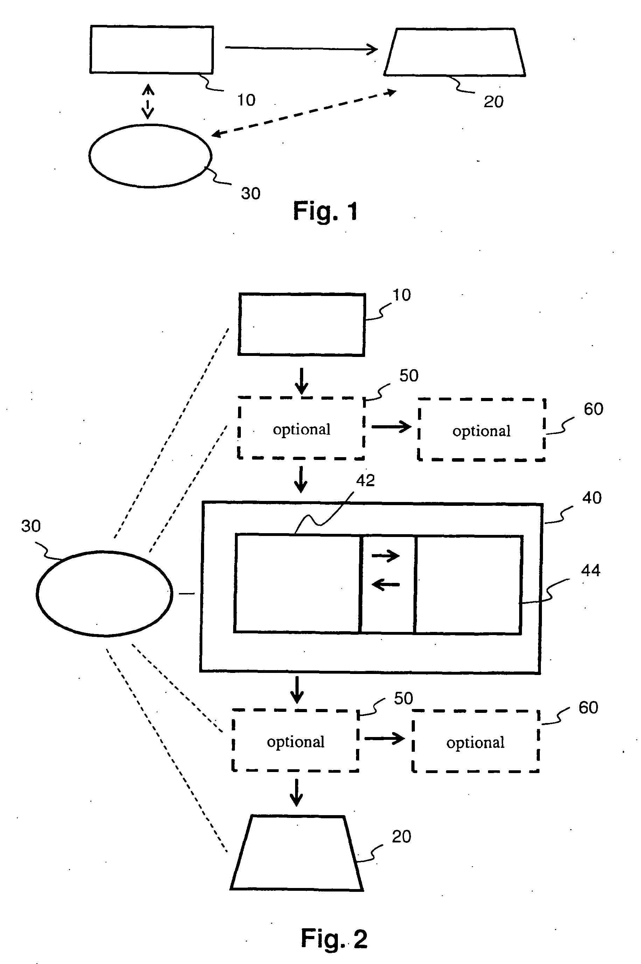

Fig. 1 shows schematically an exemplary conventional laser machining system. The laser machining system comprises a laser source 10 emitting a pulsed laser beam, i.e. a train of laser pulses. The emitted pulse train is directed to a workpiece 20 positioned for example on a workpiece positioning system. The system comprises further a control unit 30, which controls the scanning of the laser beam and/or the movement of the workpiece and/or other machining parameters.

**Fig. 2** shows an exemplary laser machining system according to an embodiment of the invention. The system includes a laser source 10 emitting a train of laser pulses (original pulse train). The pulse train emitted by the laser source 10 (original pulse beam) is coupled directly or by a suitable optical coupling system (not shown in Fig. 2) into a delay unit 44 external to the laser source 10. The optical coupling system may comprise one or more optical elements such as mirrors, lenses, beam splitters, polarizers, modulators, optical fiber(s).

The optical coupling system may further comprise at least one optical isolator, which is configured to separate the pulsed laser beam generated by the laser source 10 to be coupled into the delay unit 44 from the pulsed laser beam outputted from the delay unit 44, The optical isolator may also be a part of an optical directing system, configured to direct the pulsed laser beam with controlled time interval (i.e. after its release from the delay unit 44) to the workpiece 20. Alternatively, the optical isolator may be a part of the pulse input/output control mechanism 42.

The workpiece 20 may be positioned on a X-Y positioning table, for example on a CNC-controlled positioning table. The workpiece may be positioned by a workpiece positioning system, which may be connected to the control unit 30.

The delay unit 44 may be a resonator or may comprise a resonator or an optical setup similar to a resonator. The resonator may be any type of optical resonator, for example a resonator comprising two mirrors, forming a resonator cavity there between.

The system comprises further a pulse input/output control mechanism 42, which upon a signal from the control unit 30 releases (decouples) the trapped pulse from the delay unit 44, for example after a given number of cycles in a resonator. The signal from the control unit 30, which causes a given pulse to be released from the delay unit 44, will be called hereinafter a control signal of the given pulse. The pulse input/output control mechanism 42 may comprise at least one of a Pockels cell, an electro-optical switch and/or modulator, an acousto-optical switch and/or modulator, a movable or rotatable mirror, a glass element, etc. The pulse input/output control mechanism 42 may comprise further optical elements such as beam splitters, polarizers, lenses, etc. In an example the pulse input/output control mechanism 42 is realized by a combination of a Pockels cell and a thin film polarizer (TFP) and/or a polarizing beam splitter. Upon receiving a control signal from a control unit 30, the pulse circling in the resonator is outputted (decoupled) from the resonator and directed to the workpiece. The resonator cavity may further optionally comprise a gain medium (for example an optically pumped gain medium).

The delay unit 44 and the pulse release mechanism 42 together constitute a pulse interval control unit 40, configured to control the time interval between consecutive pulses (and thus the repetition rate) of the pulse beam going to the workpiece/machining system. The pulse interval control unit 40, the control unit 30 and optionally the optical coupling system may constitute the apparatus for controlling the time interval between consecutive pulses of the pulse train generated by a pulsed laser source 10.

Furthermore, the laser machining system may optionally comprise at least one pulse selection unit 50. A pulse selection unit 50 may be arranged in the optical path of the pulse train (pulsed beam) emitted from the laser source 10 prior to the delay unit 44. The pulse selection unit 50 may be configured such that upon a signal from the control unit 30 an incoming pulse is deflected to a beam dump 60 (for example an optical absorber) and thus prevented from being coupled into the resonator 44. The pulse selection unit 50 may also be configured such that a pulse is coupled into the delay unit 44 only upon a signal from the control unit 30. The pulse selection unit 50 may be integrated within the pulse input/output control mechanism 42.

In addition or alternatively, a pulse selection unit 50 may be arranged in the optical path of the pulse train (pulsed beam) outputted from the delay unit 44 and may be configured such as to select a pulse from the pulse train outputted from the delay unit 44. The non-selected pulses may be deflected to a beam dump 60.

The at least one pulse selection unit 50 may include at least one of a Pockels cell, an acousto-optical switch and/or modulator, an electro-optical switch and/or modulator, a movable or rotatable mirror and/or other optical switches and/or modulators. The pulse selection unit 50 may further include one or more other optical elements, such as beam splitters, lenses, polarizers, etc.

The control unit 30 implementing control logic is configured to control the time delay for a given pulse introduced by the delay unit 44. If the delay unit 44 is or comprises a resonator, the control unit 30 may be configured to control the dwelling time of each individual pulse in the resonator by controlling the number of cycles or roundtrips of a given pulse in the resonator.

The control unit 30 may be further configured to send a signal to the pulse input/output control mechanism 42, which then releases the pulse from the delay unit 44. The control unit 30 may also be connected to a pulse selection mechanism 50 and configured to send a signal to the pulse selection mechanism 50 to select a pulse from the pulse train emitted from the laser source 10 and/or from the pulse train outputted from the delay unit 44. For example, upon receiving a signal from the control unit 30 the pulse selection mechanism 50 may deflect a given pulse thus preventing it from being coupled into the delay unit 44 or may couple a given pulse into the delay unit 44.

Furthermore, the control unit 30 may be configured to receive a signal from the pulsed laser source 10 indicating that after a given time a given pulse will arrive at the pulse interval control unit 40 and more specifically at the delay unit 44. Alternatively, the control unit 30 may receive a signal from a photodetector, for example a photodetector positioned at or around the output (outlet) of the pulsed laser source 10, detecting the timing of the output of a given pulse. The control unit 30 may then determine the timing of the release of the current pulse from the delay unit 44 based on the received signal from the pulsed laser source 10 or the photodetector.

The control unit 30 may also be configured to determine the timing of the release of the current pulse from the delay unit 44 (for example a resonator) based on the timing of the release of the preceding pulse (i.e. based on the control signal of the preceding pulse) and data of the output repetition rate of the pulsed laser source 10. In many cases the output repetition rate of the pulsed laser source 10 is sufficiently stable (i.e. without significant jitter), so that the time interval between two consecutive pulses emitted from the laser source 10 will be substantially constant and known in advance. Thus, if the jitter is insignificant the control unit's signal for the previous pulse may be sufficient to generate a control signal. If the jitter is significant, it is possible to employ a delay line, which is configured to delay a given pulse with respect to its own control signal. The control unit 30 is thus given sufficient time to generate a respective control signal.

The control unit 30 may be further configured to control the positioning mechanism configured to position the workpiece 20. Alternatively or in addition, the control unit 30 may be configured to control a scanning mechanism, which scans the laser beam over the workpiece 20.

The control unit 30 may be implemented by a computer or a computer system or in a dedicated ASIC (application specific integrated circuits). Data concerning the machining process (such as machining pattern, workpiece movement speed, laser beam scanning speed, material to be processed, etc.) may be stored in suitable storing means. The control unit 30 may be further connected to various sensors, which monitor the current state of various parameters of the machining process (for example the speed of movement of various mechanical parts and/or of the workpiece) and/or various parameters of the laser source 10. The control unit 30 may then adjust the time delay for a specific pulse introduced by the delay unit 44, for example by adjusting the number of pulse cycles in the resonator for a specific pulse. Thus the time interval between two consecutive pulses of the pulse train may be controlled depending on the stored and/or measured/detected machining parameter(s) and/or parameters of the laser source 10.

The laser machining system may further comprise a suitable optical system (not shown in Fig. 2) which directs the pulsed laser beam with the controlled/adjusted repetition rate/interval between consecutive pulses to the workpiece 20. The optical directing system may comprise a scanning mechanism configured to scan the pulsed laser beam over the workpiece. The optical directing system and respectively the scanning mechanism may comprise for example one or more lenses, beam splitters, shutters, rotatable mirrors, electro-optical, acousto-optical modulators, and/or other optical elements. The optical directing system may further comprise a unit for adjusting the beam diameter and/or divergence (e.g. a collimator and/or a focusing optics).

In operation of the laser machining system, the original pulse train emitted from the laser source 10 is coupled into the delay unit 44, which introduces a controllable time delay of a given pulse with respect to the preceding and/or subsequent pulse. In case of a resonator as a delay unit 44, a pulse from the original pulse train emitted from the laser source 10 is coupled into the resonator and allowed to undergo a controllable number of cycles therein before being released. The number of cycles which a given pulse undergoes in the resonator is controlled by the control unit 30 depending on various parameters of the machining process, the laser source 10, etc. The number of cycles is preferably controlled on a pulse-by-pulse basis, i.e. individually for each pulse. In particular, the number of resonator cycles of a given pulse may be set to be different than the number of cycles of the preceding (and/or successive) pulse. This enables the introduction of a freely adjustable variable time delay of a given current pulse with respect to the preceding (and/or successive) pulse in the pulse train. Accordingly, the time interval between consecutive pulses in the pulse train may be adjusted, depending for example on different parameters of the machining process.

If for example the repetition rate of the original pulse train emitted from the laser source 10 is substantially constant, the time interval between a current pulse and the preceding pulse may be increased with respect to the time interval between two consecutive pulses of the original pulse train. The pulse subsequent to the current pulse may also be delayed by a controllable amount with respect to the current pulse. If in this case, the pulse following the current pulse is not delayed or delayed only by a small amount, the time interval between the current pulse and the subsequent pulse may become smaller than the time interval between the pulses in the original pulse train. As an example, the first pulse may be allowed to undergo 50 resonator roundtrips before being released, the second pulse 49 resonator roundtrips, the third pulse 48 roundtrips, ..., the fiftieth pulse 1 resonator roundtrip and the fifty first pulse 0 resonator roundtrips (i.e. the fifty first pulse is not delayed). In this case there are 50 or 51 pulses with a repetition rate higher than the repetition rate of pulsed beam emitted from the laser source.

By individually adjusting the time delay introduced by the delay unit 44 (by for example adjusting the number of pulse cycles in the resonator for each pulse), it is possible to realize various patterns of the time intervals between each two consecutive pulses, and thus various repetition rate patterns (including irregular repetition rate patterns). In many cases this will be sufficient for the practical purposes, as usually the output repetition rate of the pulsed laser source 10 is usually matched to the maximal machining speed.

If the necessary time delay of the current pulse exceeds a certain value, which depends on the output repetition rate of the pulsed laser source 10 and the delay unit 44 (for example a resonator), it may be advantageous to further discard at least one pulse immediately following the delayed pulse in the pulse train and to appropriately select the time delay of the subsequent non-discarded pulse. Thus for example, if the time delay of a first pulse in the pulse train is above a certain value, the second pulse in the pulse train may be discarded and the third pulse in the pulse train accordingly delayed. By combining a selection of some of the pulses with the introduction of a variable time delay between consecutive pulses, it is possible to realize many different repetition rate patterns. In particular the time interval between consecutive pulses may be freely increased or decreased with respect to the time interval between consecutive pulses in the original pulse train. Accordingly the repetition rate may be freely adjusted to be lower or higher than the repetition rate of the original pulse train. The (intentional) selection of some pulses, preferably on a pulse-by-pulse basis (for example depending on parameter of the laser processing method employing the pulse train with controlled time interval between consecutive pulses may be also undertaken independently of introducing a time delay in the delay unit 44.

In the following, an example of an individual control of the time interval between two consecutive pulses will be described in more detail for the case that the delay unit is a resonator or comprises a resonator:

If the time interval Δt₀ between two consecutive pulses of the pulse train outputted from the pulsed laser source 10 is taken as a unit (Δt₀ = 1), then a time delay Δtᵢ which is an integer times multiple of the time interval Δt₀ (Δtᵢ = nxΔtₒ, wherein n is an integer) may be realized by discarding one or more of the pulses in the pulse train. Depending on dwelling time in the resonator (i.e. on the number of pulse cycles in the resonator) it is generally possible to further realize a time delay Atⱼ, which is not an integer times multiple of the time interval Δt₀. Since generally only a discrete, integer number of pulse cycles is possible in the resonator, the time delay introduced by the resonator will also vary in discrete steps/levels. Depending on the length of the resonator, it is, however, possible to realize almost arbitrary number of discrete time delay levels, the general rule being the shorter the resonator length the greater the number of discrete levels, which the introduced time delay may take. Thus, by suitably selecting the length of the resonator, it is possible to adjust the time interval between two consecutive pulses with an almost arbitrary precision after the decimal point.

If for example the length of the resonator is selected such that the time for a single roundtrip in the resonator is the 25th part of Δt₀, with the result that there are 24 discrete levels within the original pulse interval Δt₀, it is possible to adjust the pulse interval between two consecutive pulses to nx0.04Δt₀, nx0.08Δt₀, nx0.12Δt₀, ... , nx0.96Δt₀, wherein n is an integer (for example 4, 5, 10, ...).

In another example the length of the resonator may be selected such that the time for a single roundtrip in the resonator is not an integer times multiple of the original pulse interval Δt₀. If for example the original pulse interval Δt₀ is equal to 1, the length of the resonator may be selected such that the time for a resonator roundtrip is 0.15. If "k" denotes the number of discarded/non-selected pulses and "i" denotes the number of roundtrips in the resonator, it is possible to realize time delay of (k+i*0.15), for example (k+0.15), (k+0.3), (k+0.45) ... (k+0.9), ..., (k+1.2). By appropriately selecting the number of discarded pulses "k" and the number of roundtrips "i", it is also possible to realize time delays, that differ from each other by amount as small as 0.05 (see for example 4.05 for k = 3 and i = 7; 4.10 for k = 2 and i = 14 and 4.15 for k = 4 and I = 1). This fine grading can generally be realized for time intervals between consecutive pulses from a given difference to the original time interval (in the above example from time delay 3.0, 3.05, 3.10, 3.15, etc.).

In still another example ("pulse burst mode") a plurality of pulses may be successively coupled into the resonator, without releasing the previous pulse(s) from the resonator, thereby realizing a pulse burst generator. After an adjustable or controllable dwelling time in resonator, the coupled plurality of pulses may be released from the resonator in a single burst.

If for example the original pulse interval is Δt₀ and the length of the resonator is selected such that the time for a resonator roundtrip is 1.05Δt₀, a second pulse of a pulse train may be coupled into the resonator at time 1*Δt₀ before a preceding (first) pulse of the pulse train starts its second roundtrip in the resonator at time 1.05Δt₀ At time 2Δt₀ the third pulse may be coupled into the resonator just before the preceding first and the second pulses start their respective roundtrips. In the same manner a plurality of pulses (for example 20) may be coupled into the resonator and allowed to circulate therein. The coupled pulses may be released from the resonator in a single burst, with for example 20 times shorter repetition rate than the repetition rate of the original pulse train. The pulse burst mode may be advantageously used for various applications requiring illumination with bursts of pulses.

Via suitable selection of the number of non-selected pulses and/or the number of roundtrips a given pulse or a given plurality of pulses undergoes in the resonator, it is possible to adjust the time interval between two consecutive pulses with great precision and within a large range.

In the system described above, it is further possible to "capture" a given pulse in the resonator and to let it cycle therein until the pulse will be needed. The maximal dwelling time of a given pulse in the resonator will generally be inversely proportional to the output repetition rate of the pulsed laser. If a longer time delay is needed, it is possible to discard some pulses (prior to coupling into the resonator and/or after the outputting from the resonator), as described above.

In the laser machining system (or any other system employing the above described method and an apparatus for adjusting the repetition rate of a pulsed laser beam) the original laser pulses outputted from the laser source 10 may experience various losses. The losses may be roughly divided into "static losses" incurred at the various optical elements constituting the system, such as input/output windows, coupling losses, losses at an unit for adjusting the beam diameter, etc., and variable losses, which occur in connection with the control of the time interval between consecutive pulses (i.e. in connection with the control of the repetition rate). The variable losses generally vary depending on the amount of time interval adjustment, in particular depending on the individual time delay for each pulse. Furthermore, losses to the average power of the laser beam (but not to the individual pulse energy) may occur due to the discard of some laser pulses if the time delay exceeds a certain value. In order to compensate for the losses and in particular the variable losses, the resonator may optionally comprise a gain medium, which may be suitably pumped (for example optically pumped) and which amplifies the pulse circling in the resonator. Alternatively or in addition the energy of each laser pulse emitted by the pulse layer source 10 may be varied.

In the above examples, the energy losses for a given pulse will generally be independent on the positions before the decimal point and will only depend on the positions after the decimal point, which in turn depend on the number of pulse cycles needed to realize a given time delay. Thus, the energy losses for a given pulse associated with a time interval adjustment to 3.9 times the original time interval Δt₀ will be greater than the respective pulse energy losses associated with a time interval adjustment to 10.2 or 5.3 or 1.1 times the original time interval Δt₀.

The losses in the resonator are mainly due to the pulse input/output control mechanism employed, and more specifically due to the optical switch employed, for example a Pockels cell. If for example the incurred losses of the pulse energy per pulse cycle in the resonator are about 0.5%, then for a system with 24 discrete levels of the time delay, the maximal loss of the pulse energy will be about 11.3%. For a system with 49 discrete levels (i.e. at discrete steps of about 2% of the original time interval Δt₀) the maximal loss of the pulse energy will be about 21.8%.

As described above, in order to compensate for pulse energy losses due to for example an inefficient Pockels cell and/or a great number of discrete time delay levels, it is possible to employ a gain medium within the resonator, which amplifies the pulse at each cycle, so as to compensate for the losses incurred for example by the switch and/or other optical elements of the resonator. An alternative solution is to intentionally incur additional variable losses on an individual pulse basis. The individual additional variable pulse losses may be selected such as that the overall energy losses are substantially the same for all pulses, independent on the number of cycles of a given pulse in the resonator. This may be achieved for example by intentionally introducing additional losses for each pulse, the introduced additional losses depending on the number of cycles in the resonator of a given pulse (i.e. dependent on the positions after the decimal point of the adjusted time interval). The intentional, controllable individual additional pulse losses may introduced at the pulse selection unit, and/or in some cases at the pulse release mechanism, in particular at the optical switch (e.g. the Pockels cell) employed.

The level of the intentional, controllable individual additional pulse losses in case the delay unit is or comprises a resonator may be determined as follows:
a) determining/setting the maximal desired/intended number of resonator roundtrips in the resonator;
b) determining the losses ΔEₘₐₓ incurred for the maximal number of resonator roundtrips or the respective loss factor Vₘₐₓ. The loss factor V is defined as V = Eₒᵤₜ/Eᵢₙ, wherein E is the pulse energy in J;
c) determining the losses/the loss factor for the number of roundtrips of the current pulse. For example, if the number of roundtrips of the current pulse in the resonator is "i" and there are 1% losses per roundtrip, the loss factor for the current pulse is V_{current} = 0.99ⁱ;
d) determining the level of intentional, controllable individual additional pulse losses for the current pulse by building the difference between the losses determined at steps b) and c), i.e. between the losses incurred for the maximal number of resonator roundtrips and the losses for the number of roundtrips of the current pulse (e.g. intentional pulse losses = (losses at b) - losses at c)), the losses being given as absolute values). In terms of loss factors, the loss factor of the intentional, controllable individual additional pulse losses for the current pulse Vᵢₙₜₑₙₜᵢₒₙₐₗ can be determined by the formula Vᵢₙₜₑₙₜᵢₒₙₐₗ = Vₘₐₓ/N_{current}. Thus for example, if the losses incurred for the maximal number of resonator roundtrips are 20% (Vₘₐₓ = 0.8) and the losses for the current pulse are 10% (V_{current} = 0.9), then Vᵢₙₜₑₙₜᵢₒₙₐₗ = 0.889.

An example method for laser machining employing a method for controlling the time interval between individual pulses in a pulse train (and thus the repetition rate of the pulse beam) may comprise the following steps:

At the beginning data concerning the machining process and/or machining pattern are received by the control unit 30. The data may include data related to the time intervals between the consecutive pulses in the pulse train, necessary to realize the machining pattern. The time intervals may be greater than 1 (when normalized with respect to the inverse output repetition rate of the pulsed laser source). The precision of the time interval adjustment (for example expressed by the positions after the decimal point) may be selected appropriately depending on the specific machining pattern and/or process parameters. For example if the time interval is to be adjusted with a discrete step of 4% from the time interval between two pulses of the pulse train outputted from the laser source 10, then the adjusted time interval may generally take all possible discrete values ≥1+nx0.04, wherein n is an integer. Thus the adjusted time interval may take the values 1.04, 1.08, ..., 3.52, ..., 10.96, .... However, if the time delay of the m-th pulse is great and the time delay of the subsequent pulse ((m+1)-th) pulse is small, it is also possible to realize a time interval between the m-th pulse and the (m+1)-th pulse, which is smaller than one.

The next step may involve a calculation of the required time delay for a specific pulse from the pulse beam outputted from the laser source 10. The necessary time delay may be calculated based on the received data concerning the machining process and/or machining pattern, the output repetition rate of the laser source 10 and any time delay of the preceding and/or the subsequent pulse. If for example the preceding pulse has been delayed by 0.12 (in units of the original time interval Δt₀ between two pulses) and the time interval between the current pulse and the preceding pulse is to be set to 8.32 units, then the overall necessary time delay will be 8.44 units. This may be achieved by discarding 7 pulses, selecting the eighth and delaying it by 0.44 units. In the above example such delay will require 11 pulse cycles in the resonator.

Optionally, the method may comprise determination of the pulses from the original pulse train selected to be delayed. Alternatively or in addition, the method may comprise the step of determination of the pulses outputted from the delay unit 44 selected for further use. The determination may be based on the received data concerning the machining process and/or machining pattern, the output repetition rate of the laser source 10 and any time delay of the preceding and/or the subsequent pulse. Via a suitable determination of the time delay, which a given pulse or a given plurality of pulses experiences in the delay unit 44, and optionally the number of discarded (non-selected) pulses of the original pulse train and/or of the pulse train outputted from the delay unit 44, it is possible to adjust the time interval between two consecutive pulses with great precision and within a large range.

In the next step the control unit 30 may receive a signal from the laser source 10 or from a respective photodetector positioned at or near the output of the laser source 10 that a pulse is outputted from the laser source 10. If this pulse is the pulse selected for a delay (the eighth pulse in the above example), the control unit 30 sends a respective signal to a corresponding optical switch, for example a Pockels cell, which "opens" the delay unit 44, thereby enabling the selected pulse to be coupled into the delay unit. If this pulse is not the pulse selected for a delay, the pulse may be discarded, for example by diverting it to an optical dump 60.

After coupling the selected pulse into the delay unit 44, the time delay introduced by the delay unit 44 may be controlled based on the calculated time delay. In case the delay unit 44 is or comprises a resonator, the resonator may be closed for the predetermined dwelling time, i.e. for the predetermined number of pulse cycles (in the above example 11 cycles) after the selected pulse has been coupled into it. After the pulse has completed the predetermined number of cycles the control unit 30 sends a signal to a corresponding switch (a part of the pulse input/output control mechanism 42) to open the resonator and release the pulse from it. The pulse is then directed by a respective optical system to the workpiece.

The above steps may be repeated until the desired machining pattern is realized, i.e. until the machining process of the workpiece is completed.

**Table 1** illustrates three Examples of a method for controlling the time interval between consecutive pulses of a pulsed laser beam (and thus the repetition rate). Column "Time" of Table 1 shows the time in time units, column "OP" shows the original pulses "Xi", i = 1, 2, ... at the output of the pulsed laser source 10, column "NP" shows the new pulses "Ni", i = 1, 2, ... with the adjusted time interval, and column "TD" shows the time delay introduced by the delay unit for a given pulse. The non-selected (discarded) laser pulses "Xi" are underlined. The pulses may be discarded prior to being coupled into the delay unit 44 or after being outputted from the delay unit 44.

In Example 1 the time interval between two consecutive laser pulses in the output pulse train of the laser (i.e. between two consecutive original laser pulses) is 5 time units. The first original pulse X1 is not delayed, the second original pulse X2 is delayed by two time units, the third original pulse X3 is delayed by four time units, the fourth original pulse X4 is discarded, the fifth original pulse X5 is delayed by one time unit, the sixth original pulse X6 is delayed by three time units and the seventh original pulse X7 is discarded. Thus, the time interval between two consecutive laser pulses after the repetition rate adjustment can be set to 7 time units.

In Example 2 the time interval between two consecutive original laser pulses is 3 time units. The first original pulse X1 is not delayed, the second and the third original pulses X2 and X3 are discarded, the fourth original pulse X4 is delayed by one time unit, the fifth and the sixth pulses X5 and X6 are discarded, the seventh original pulse X7 is delayed by two time units, the eighth original pulse X8 is discarded, the ninth and the tenth original pulses X9 and X10 are discarded, the eleventh original pulse X11 is not delayed, the twelfth original pulse X12 and the thirteenth original pulse X13 are discarded. Thus, the time interval between two consecutive laser pulses after the repetition rate adjustment can be set to 10 time units.

In Example 3 the time interval between two consecutive original pulses is three time units. The fifth, the seventh and the eleventh original pulses X5, X7 and X11 are discarded, the first, the third, the sixth, the tenth and the thirteenth original pulses X1, X3, X6, X10 and X13 are not delayed, the second, the eighth and the twelfth original pulses X2, X8 and X12 are delayed by one time unit and the fourth and the ninth original pulses X4 and X9 are delayed by two time units.

In Examples 1 and 2 the time interval between two consecutive pulses Ni after the time interval adjustment is constant. In Example 3 the time interval between two consecutive pulses Ni after the time interval adjustment varies, i.e. the adjusted repetition rate is irregular/variable.

Embodiments of the present invention may realize the following advantages. Since the time interval between two consecutive pulses may be freely adjustable, in particular dependent on machining parameters such as the momentary machining speed and/or the momentary laser beam scanning speed, it is possible to efficiently use the acceleration/deceleration phases of the machining process without quality deterioration. Furthermore, it is also possible to improve the quality of the machined pattern, in particular when realizing complex patterns. Still further advantage is that it is possible to integrate repetition rate control within existing systems in a relatively easy manner, without having to change the pulsed laser source.

**Table 1**

| | **Example 1** | | | | **Example 2** | | | | **Example 3** | | |
|---|---|---|---|---|---|---|---|---|---|---|---|
| Time | OP | NP | TD | Time | OP | NP | TD | Time | OP | NP | TD |
| 0 | X1 | N1 | +0 | 0 | X1 | N1 | +0 | 0 | X1 | N1 | +0 |
| 1 | | | | 1 | | | | 1 | | | |
| 2 | | | | 2 | | | | 2 | | | |
| 3 | | | | 3 | X2 | | | 3 | X2 | | +1 |
| 4 | | | | 4 | | | | 4 | | N2 | |
| 5 | X2 | | +2 | 5 | | | | 5 | | | |
| 6 | | | | 6 | X3 | | | 6 | X3 | N3 | +0 |
| 7 | | N2 | | 7 | | | | 7 | | | |
| 8 | | | | 8 | | | | 8 | | | |
| 9 | | | | 9 | X4 | | +1 | 9 | X4 | | +2 |
| 10 | X3 | | +4 | 10 | | N2 | | 10 | | | |
| 11 | | | | 11 | | | | 11 | | N4 | |
| 12 | | | | 12 | X5 | | | 12 | X5 | | |
| 13 | | | | 13 | | | | 13 | | | |
| 14 | | N3 | | 14 | | | | 14 | | | |
| 15 | X4 | | | 15 | X6 | | | 15 | X6 | N5 | +0 |
| 16 | | | | 16 | | | | 16 | | | |
| 17 | | | | 17 | | | | 17 | | | |
| 18 | | | | 18 | X7 | | +2 | 18 | X7 | | |
| 19 | | | | 19 | | | | 19 | | | |
| 20 | X5 | | +1 | 20 | | N3 | | 20 | | | |
| 21 | | N4 | | 21 | X8 | | | 21 | X8 | | +1 |
| 22 | | | | 22 | | | | 22 | | N6 | |
| 23 | | | | 23 | | | | 23 | | | |
| 24 | | | | 24 | X9 | | | 24 | X9 | | +2 |
| 25 | X6 | | +3 | 25 | | | | 25 | | | |
| 26 | | | | 26 | | | | 26 | | N7 | |
| 27 | | | | 27 | X10 | | | 27 | X10 | N8 | +0 |
| 28 | | N5 | | 28 | | | | 28 | | | |
| 29 | | | | 29 | | | | 29 | | | |
| 30 | X7 | | | 30 | X11 | N4 | +0 | 30 | X11 | | |
| 31 | | | | 31 | | | | 31 | | | |
| 32 | | | | 32 | | | | 32 | | | |
| 33 | | | | 33 | X12 | | | 33 | X12 | | +1 |
| 34 | | | | 34 | | | | 34 | | N9 | |
| 35 | X8 | N6 | +0 | 35 | | | | 35 | | | |
| 36 | | | | 36 | X13 | | | 36 | X13 | N10 | |
| 37 | | | | 37 | | | | 37 | | | |
| 38 | | | | 38 | | | | 38 | | | |

### List of Reference Numerals

- 10: pulsed laser source
- 20: workpiece and workpiece positioning system
- 30: control unit
- 40: pulse interval control unit
- 42: pulse input/output control mechanism
- 44: delay unit (e.g. resonator)
- 50: pulse selection unit
- 60: beam dump

## Claims

1. A method for processing a workpiece (20) comprising
generating a pulse train by a laser source (10);
controlling the time interval between consecutive pulses of the pulse train;
directing the pulse train with the controlled time interval to the workpiece (20),
wherein the controlling the time interval between consecutive pulses of a pulse train generated by a laser source (10), comprises
coupling at least one pulse from the pulse train generated by the laser source (10) into a delay unit (44) external to the laser source (10) or to the resonator of the laser source (10);
controlling a time delay of the at least one pulse coupled into the delay unit (44); and
outputting the at least one pulse from the delay unit (44).

2. The method according to claim 1, wherein the delay unit (44) comprises a resonator and wherein controlling the time delay of the at least one pulse comprises controlling the number of cycles which the at least one pulse undergoes in the resonator prior to its output.

3. The method according to claim 1 or 2 further comprising selecting at least one pulse from the original pulse train generated by the laser source (10) and/or from the train of pulses released from the delay unit (44) and discarding the non-selected pulses.

4. The method according to any one of the preceding claims, wherein the time interval between consecutive pulses is controlled depending on at least one parameter of the original pulse train generated by the laser source (10).

5. The method according to any one of the preceding claims further comprising amplifying the pulse in the delay unit (44) and/or introducing variable pulse losses.

6. The method according to any one of the preceding claims, wherein the time interval between consecutive pulses is controlled depending on at least one parameter of the workpiece processing, said at least one parameter being preferably a moving speed of the workpiece (20) and/or of a scanning speed of the laser beam over the workpiece (20).

7. A laser processing system for processing a workpiece (20) comprising
a laser source (10) configured to generate a pulse train;
an apparatus for controlling the time interval between consecutive pulses of the pulse train,
a directing system, configured to direct the pulse train with the controlled time interval to the workpiece (20),
wherein the apparatus for controlling the time interval between consecutive pulses of a pulse train emitted from a laser source (10) comprises
a delay unit (44) external to the laser source (10) or to the resonator of the laser source (10);
a control unit (30) configured to control a time delay introduced by the delay unit (44) of an at least one pulse of the pulse train coupled into the delay unit (44).

8. The laser processing system of claim 7, wherein the delay unit (44) comprises a resonator and the control unit (30) is configured to control the number of cycles which the at least one pulse undergoes in the resonator.

9. The laser processing system of claim 7 or 8 further comprising a pulse input/output control mechanism (42) configured to output the at least one pulse coupled into the delay unit (44) from the delay unit (44) upon receiving a control signal from the control unit (30).

10. The laser processing system according to any one of claims 7 to 9, comprising further a pulse selection unit (50) configured to select at least one pulse from the pulse train generated by the laser source (10) or from the pulse train released from the delay unit (44).

11. The laser processing system according to any one of the claims 7 to 10, wherein the apparatus is configured to control the time interval between consecutive pulses of a pulse train depending on at least one detected parameter of the original pulse train generated by the laser source (10).

12. The laser processing system according to any one of claims 7 to 11, wherein the delay unit (44) comprises means for amplifying the laser pulse (510) and/or means for introducing variable pulse losses.

13. The laser processing system according to any one of claims 7 to 12 further comprising one or more process parameters measuring units, configured to respectively measure one or more parameters of the workpiece processing.

## Patentansprüche

1. Verfahren zum Verarbeiten eines Werkstücks (20), das umfasst:
Erzeugen eines Impulszugs durch eine Laserquelle (10);
Steuern bzw. Regeln des Zeitintervalls zwischen aufeinanderfolgenden Impulsen des Impulszugs;
Lenken des Impulszugs mit dem gesteuerten bzw. geregelten Zeitintervall auf das Werkstück (20),
wobei das Steuern bzw. Regeln des Zeitintervalls zwischen aufeinanderfolgenden Impulsen eines Impulszugs, der durch eine Laserquelle (10) erzeugt wird, umfasst:
Einkoppeln wenigstens eines Impulses aus dem von der Laserquelle (10) erzeugten Impulszugs in eine Verzögerungseinheit (44) außerhalb der Laserquelle (10) oder des Resonators der Laserquelle (10);
Steuern bzw. Regeln einer Zeitverzögerung des wenigstens einen Impulses, der in die Verzögerungseinheit (44) eingekoppelt wird; und
Ausgeben des wenigstens einen Impulses aus der Verzögerungseinheit (44).

2. Verfahren nach Anspruch 1, wobei die Verzögerungseinheit (44) einen Resonator umfasst und wobei das Steuern bzw. Regeln der Zeitverzögerung des wenigstens einen Impulses das Steuern bzw. Regeln der Anzahl von Zyklen umfasst, die der wenigstens eine Impuls vor seiner Ausgabe in dem Resonator durchmacht.

3. Verfahren nach Anspruch 1 oder 2, das ferner das Auswählen wenigstens eines Impulses aus dem von der Laserquelle (10) erzeugten ursprünglichen Impulszug und/oder aus dem von der Verzögerungseinheit (44) freigegebenen Impulszug und das Verwerfen nicht ausgewählter Impulse umfasst.

4. Verfahren nach einem der vorhergehenden Ansprüche, wobei das Zeitintervall zwischen aufeinanderfolgenden Impulsen abhängig von wenigstens einem Parameter des von der Laserquelle (10) erzeugten ursprünglichen Impulses (10) gesteuert bzw. geregelt wird.

5. Verfahren nach einem der vorhergehenden Ansprüche, das ferner das Verstärken des Impulses in der Verzögerungseinheit (44) und/oder das Einbringen variabler Impulsverluste umfasst.

6. Verfahren nach einem der vorhergehenden Ansprüche, wobei das Zeitintervall zwischen aufeinanderfolgenden Impulsen abhängig von wenigstens einem Parameter der Werkstückverarbeitung gesteuert bzw, geregelt wird, wobei der wenigstens eine Parameter vorzugsweise eine Bewegungsgeschwindigkeit des Werkstücks (20) und/oder eine Abtastgeschwindigkeit des Laserstrahls über dem Werkstück (20) ist.

7. Laserverarbeitungssystem zum Verarbeiten eines Werkstücks (20), das umfasst:
eine Laserquelle (10), die konfiguriert ist, um einen Impulszug zu erzeugen;
eine Vorrichtung zum Steuern bzw. Regeln des Zeitintervalls zwischen aufeinanderfolgenden Impulsen des Impulszugs;
ein Lenksystem, das konfiguriert ist, um den Impulszug mit dem gesteuerten bzw. geregelten Zeitintervall auf das Werkstück (20) zu lenken,
wobei die Vorrichtung zum Steuern bzw. Regeln des Zeitintervalls zwischen aufeinanderfolgenden Impulsen eines Impulszugs, der von einer Laserquelle (10) emittiert wird, umfasst:
eine Verzögerungseinheit (44) außerhalb der Laserquelle (10) oder des Resonators der Laserquelle (10);
eine Steuer- bzw. Regelungseinheit (30), die konfiguriert ist, um eine Zeitverzögerung wenigstens eines in die Verzögerungseinheit (44) eingekoppelten Impulses, die von der Verzögerungseinheit eingeführt wird, zu steuern bzw. zu regeln.

8. Laserverarbeitungssystem nach Anspruch 7, wobei die Verzögerungseinheit (44) einen Resonator umfasst und die Steuer- bzw. Regelungseinheit (30) konfiguriert ist, um die Anzahl von Zyklen, die der wenigstens eine Impuls in dem Resonator durchmacht, zu steuern bzw. zu regeln.

9. Laserverarbeitungssystem nach Anspruch 7 oder 8, das ferner einen Impulseingabe-/Ausgabesteuer- bzw. Regelungsmechanismus (42) umfasst, der konfiguriert ist, um nach Empfang eines Steuer- bzw. Regelungssignals von der Steuer- bzw. Regelungseinheit (30) den wenigstens einen Impuls, der in die Verzögerungseinheit (44) eingekoppelt wird, von der Verzögerungseinheit (44) auszugeben.

10. Laserverarbeitungssystem nach einem der Ansprüche 7 bis 9, das ferner eine Impulsauswahleinheit (50) umfasst, die konfiguriert ist, um wenigstens einen Impuls aus dem von der Laserquelle (10) erzeugten Impulszug oder aus dem von der Verzögerungseinheit (44) freigegebenen Impuls auszuwählen.

11. Laserverarbeitungssystem nach einem der Ansprüche 7 bis 10, wobei die Vorrichtung konfiguriert ist, um das Zeitintervall zwischen aufeinanderfolgenden Impulsen eines Impulszugs abhängig von wenigsten einem erfassten Parameter des ursprünglich von der Laserquelle (10) erzeugten Impulszugs zu steuern bzw. zu regeln.

12. Laserverarbeitungssystem nach einem der Ansprüche 7 bis 11, wobei die Verzögerungseinheit (44) Mittel zum Verstärken des Laserimpulses (510) und/oder Mittel zum Einführen variabler Impulsverluste umfasst.

13. Laserverarbeitungssystem nach einem der Anspruche 7 bis 12, das ferner eine oder mehrere Messeinheiten für Verfahrensparameter umfasst, die konfiguriert sind, um jeweils einen oder mehrere Parameter der Werkstückverarbeitung zu messen.

## Revendications

1. Procédé de transformation d'une pièce à travailler (20) comprenant
générer un train d'impulsions par une source laser (10) ;
commander l'intervalle de temps entre des impulsions consécutives du train d'impulsions ;
diriger le train d'impulsions avec l'intervalle de temps commandé vers la pièce à travailler (20),
dans lequel la commande de l'intervalle de temps entre des impulsions consécutives d'un train d'impulsions généré par une source laser (10) comprend raccorder au moins une impulsion provenant du train d'impulsions généré par la source laser (10) dans un module de retard (44) externe à la source laser (10) ou au résonateur de la source laser (10) ;
commander un retard temporel de l'au moins une impulsion raccordée dans le module de retard (44) ; et
émettre l'au moins une impulsion depuis le module de retard (44).

2. Procédé selon la revendication 1, dans lequel le module de retard (44) comprend un résonateur et dans lequel commander le retard temporel de l'au moins une impulsion comprend commander le nombre de cycles que l'au moins une impulsion subit dans le résonateur avant son émission.

3. Procédé selon la revendication 1 ou 2, comprenant en outre sélectionner au moins une impulsion parmi le train d'impulsions d'origine généré par la source laser (10) et/ou parmi le train d'impulsions libérées depuis le module de retard (44) et éliminer les impulsions non sélectionnées.

4. Procédé selon l'une quelconque des revendications précédentes, dans lequel l'intervalle de temps entre des impulsions consécutives est commandé en fonction d'au moins un paramètre du train d'impulsions d'origine généré par la source laser (10).

5. Procédé selon l'une quelconque des revendications précédentes, comprenant en outre amplifier l'impulsion dans le module de retard (44) et/ou introduire des pertes d'impulsion variables.

6. Procédé selon l'une quelconque des revendications précédentes, dans lequel l'intervalle de temps entre des impulsions consécutives est commandé en fonction d'au moins un paramètre de la transformation de pièce à travailler, ledit au moins un paramètre étant de préférence une vitesse de déplacement de la pièce à travailler (20) et/ou d'une vitesse de balayage du faisceau laser sur la pièce à travailler (20).

7. Système de transformation laser pour transformer une pièce à travailler (20) comprenant
une source laser (10) configurée pour générer un train d'impulsions ;
un appareil pour commander l'intervalle de temps entre des impulsions consécutives du train d'impulsions,
un système de direction configuré pour diriger le train d'impulsions avec l'intervalle de temps commandé vers la pièce à travailler (20),
dans lequel l'appareil pour commander l'intervalle de temps entre des impulsions consécutives d'un train d'impulsions émis depuis une source laser (10) comprend
un module de retard (44) externe à la source laser (10) ou au résonateur de la source laser (10) ;
un module de commande (30) configuré pour commander un retard temporel introduit par le module de retard (44) d'au moins une impulsion du train d'impulsions raccordée dans le module de retard (44).

8. Système de transformation laser selon la revendication 7, dans lequel le module de retard (44) comprend un résonateur et le module de commande (30) est configuré pour commander le nombre de cycles que l'au moins une impulsion subit dans le résonateur.

9. Système de transformation laser selon la revendication 7 ou 8, comprenant en outre un mécanisme de commande d'entrée/sortie d'impulsions (42) configuré pour émettre l'au moins une impulsion raccordée dans le module de retard (44) depuis le module de retard (44) suite à la réception d'un signal de commande provenant du module de commande (30).

10. Système de transformation laser selon l'une quelconque des revendications 7 à 9, comprenant en outre un module de sélection d'impulsions (50) configuré pour sélectionner au moins une impulsion parmi le train d'impulsions généré par la source laser (10) ou parmi le train d'impulsions libéré depuis le module de retard (44).

11. Système de transformation laser selon l'une quelconque des revendications 7 à 10, dans lequel l'appareil est configuré pour commander l'intervalle de temps entre des impulsions consécutives d'un train d'impulsions en fonction d'au moins un paramètre détecté du train d'impulsions d'origine généré par la source laser (10).

12. Système de transformation laser selon l'une quelconque des revendications 7 à 11, dans lequel le module de retard (44) comprend un moyen pour amplifier l'impulsion laser (510) et/ou un moyen pour introduire des pertes d'impulsion variables.

13. Système de transformation laser selon l'une quelconque des revendications 7 à 12, comprenant en outre un ou plusieurs modules de mesure de paramètres de transformation configurés pour mesurer respectivement un ou plusieurs paramètres de la transformation de pièce à travailler.
